# EUROPÄISCHE PATENTANMELDUNG

(11) **EP 2 239 373 A2**
(43) Veröffentlichungstag der Anmeldung: **13.10.2010**
(21) Anmeldenummer: 10001748.2
(22) Anmeldetag: 22.02.2010
(51) Int. Cl.: E01C 11/22

(54) **Steinsystem für den Straßen- und/oder Wegebau**

(30) Priorität: 07.04.2009 DE 102009016351
(71) Anmelder: KRONIMUS AG, 76473 Iffezheim (DE)
(72) Erfinder: Kronimus, Martin, 76530 Baden-Baden (DE)
(74) Vertreter: Otten, Herbert

(57) **Zusammenfassung**

Die Erfindung betrifft ein Steinsystem (S) für den Straßen- und/oder Wegebau. Hierbei umfasst das Steinsystem (S) insbesondere ein Pultsteinsystem (PS) und/oder insbesondere ein Rinnensteinsystem, wobei jeder Pultstein bzw. Rinnenstein (R) des Pultssteinsystems (PS) bzw. des Rinnensteinsystems wenigstens einen Oberflächenabschnitt (3) aufweist, welcher zur Ergänzung einer Verkehrsfläche ausgebildet ist, und wenigstens einen weiteren Oberflächenabschnitt (4) aufweist, welcher zur gerichteten Wasserführung ausgebildet ist, wobei die Oberflächenabschnitte (3, 4) in ihrer Formgebung optimiert bzw. in ihrem übergang aufeinander angepasst sind. (Figur 2)

## Beschreibung

Die Erfindung betrifft ein Steinsystem für den Straßen- und/oder Wegebau gemäß dem Oberbegriff des Anspruchs 1.

Aus der EP 1 088 941 A1 ist ein Steinsystem für den Straßen- und/oder Wegebau bekannt, welches ein Pultsteinsystem und ein Rinnensteinsystem zeigt.

Es ist Aufgabe der Erfindung, ein Steinsystem für den Straßen- und/oder Wegebau vorzuschlagen, welches hinsichtlich der Anforderungen an Herstellbarkeit und Praxistauglichkeit optimiert ist.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Das erfindungsgemäße Steinsystem für den Straßen- und/oder Wegebau, sieht insbesondere ein Pultsteinsystem und/oder insbesondere ein Rinnensteinsystem vor, bei welchem bzw. welchen jeder Pultstein bzw. Rinnenstein wenigstens einen Oberflächenabschnitt aufweist, welcher zur Ergänzung der Verkehrsfläche ausgebildet ist, und wenigstens einen weiteren Oberflächenabschnitt aufweist, welche zur gerichteten Wasserführung ausgebildet ist, wobei die Oberflächenabschnitte in ihrer Formgebung optimiert bzw. in ihrem Übergang aufeinander angepasst sind. Hierdurch wird der Zielkonflikt zwischen optimaler Wasserführung und maximaler Verkehrssicherheit abschwächt.

Weitere Einzelheiten der Erfindung werden in der Zeichnung anhand von schematisch dargestellten Ausführungsbeispielen beschrieben.

Hierbei zeigen:
- Figur 1:: eine erste Ausführungsvariante eines Pultsteins in perspektivischer Darstellung;
- Figur 2:: ein Pultsteinsystem aus Pultsteine entsprechend der Figur 1, welche eine Pultrinne bilden;
- Figur 3:: eine zweite Ausführungsvariante eines Pultsteins in perspektivischer Darstellung;
- Figur 4:: eine dritte Ausführungsvariante eines Pultsteins in perspektivischer Darstellung;
- Figur 5:: eine vierte Ausführungsvariante eines Pultsteins in perspektivischer Darstellung;
- Figur 6:: eine fünfte Ausführungsvariante eines Pultsteins in perspektivischer Darstellung;
- Figuren 7a, 7b:: eine Draufsicht und eine Seitenansicht einer ersten Ausführungsvariante eines Rinnensteins;
- Figuren 8a, 8b:: eine Draufsicht und eine Seitenansicht einer zweiten Ausführungsvariante eines Rinnensteins;
- Figur 9:: eine Draufsicht einer dritten Ausführungsvariante eines Rinnensteins und
- Figuren 10a, 10b:: eine Draufsicht und eine Schnitt durch eine vierte Ausführungsvariante eines Rinnensteins.

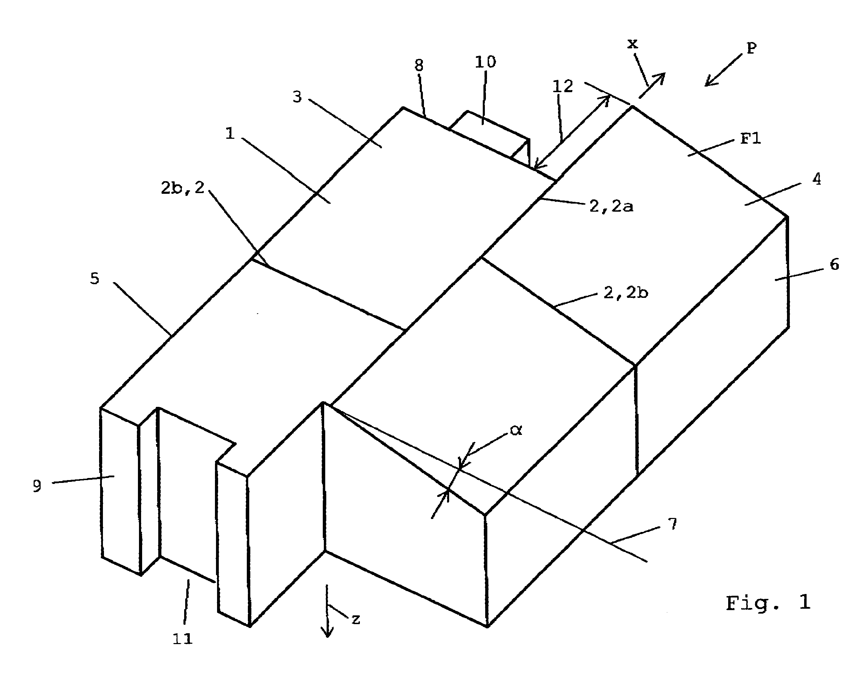

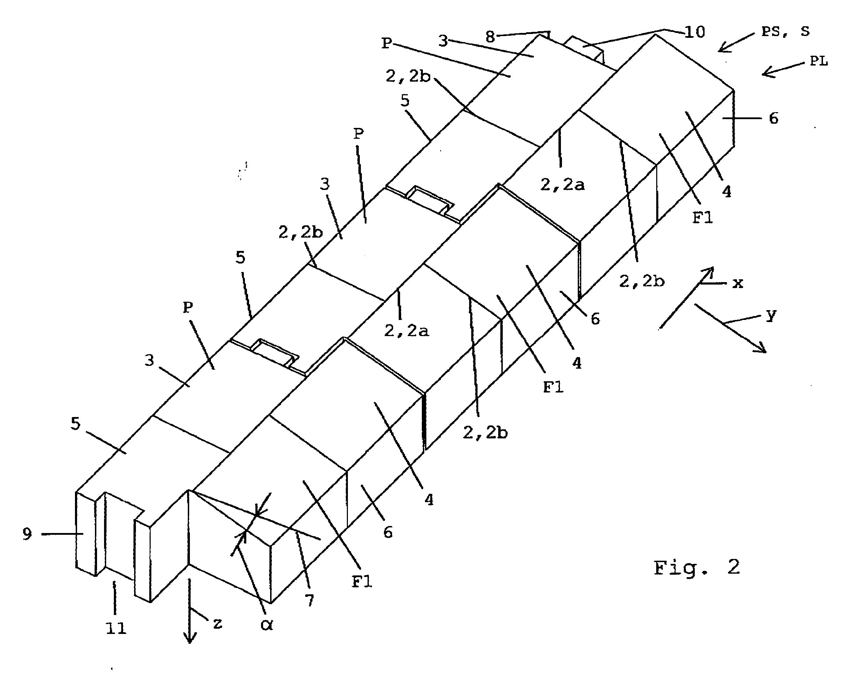

In der Figur 1 ist eine erste Ausführungsvariante eines Pultsteins P in perspektivischer Darstellung gezeigt. Der Pultstein P ist Bestandteil eines Pultsteinsystems PS bzw. eines Steinsystems S, welches mehrere Pultsteine P umfasst (siehe Figur 2). Die in einer Längsrichtung x aneinanderliegenden Pultsteine P bilden eine Pultleiste PL wie dies in der Figur 2 gezeigt ist. Der einzelne Pultstein P (siehe Figur 1) weist eine Oberseite 1 mit Scheinfugen 2 auf.

Die Scheinfugen 2 sind als Längsscheinfugen 2a, welche in die Längsrichtung x verlaufen und als Querscheinfugen 2b, welche quer zur Längsrichtung x verlaufen, ausgeführt. Weiterhin ist die Oberseite 1 des Pultsteins P in einen ersten, wagrecht verlaufenden Oberflächenabschnitt 3 und einen zweiten, schräg verlaufenden Oberflächenabschnitt 4 unterteilt. Hierbei grenzt der erste Oberflächenabschnitt 3 an eine erste Längsseite 5 des Pultsteins P und der zweite Oberflächenabschnitt 4 grenzt an eine zweite Längsseite 6 des Pultsteins P. Hierbei ist der zweite Oberflächenabschnitt 4 zu einer Horizontalen 7 um einen Winkel α geneigt, welcher vorzugsweise zwischen 5° und 20° liegt. Die beiden Oberflächenabschnitte 3 und 4 gehen an der Längsscheinfuge 2a ineinander über. An gegenüberliegenden Querseiten 8, 9 weist der Pultstein P eine Nase 10 bzw. einen Rücksprung 11 auf. Bei Pultstein P, welche in der Längsrichtung x aneinander anliegen greift ein erster Pultstein P mit seiner Nase 10 in den Rücksprung 11 eines benachbarten Pultsteins P. Die Nase 10 und der Rücksprung 11 sind im Bereich des ersten Oberflächenabschnitts 3 ausgeführt.

Weiterhin sind der erste Oberflächenabschnitt 3 und der zweite Oberflächenabschnitt 4 in die Längsrichtung x um einen Längsversatz 12 gegeneinander versetzt. Bei der in der Figur 2 in perspektivischer Ansicht gezeigten Pultleiste PL sind drei Pultsteine P in der Längsrichtung x aneinander gereiht.

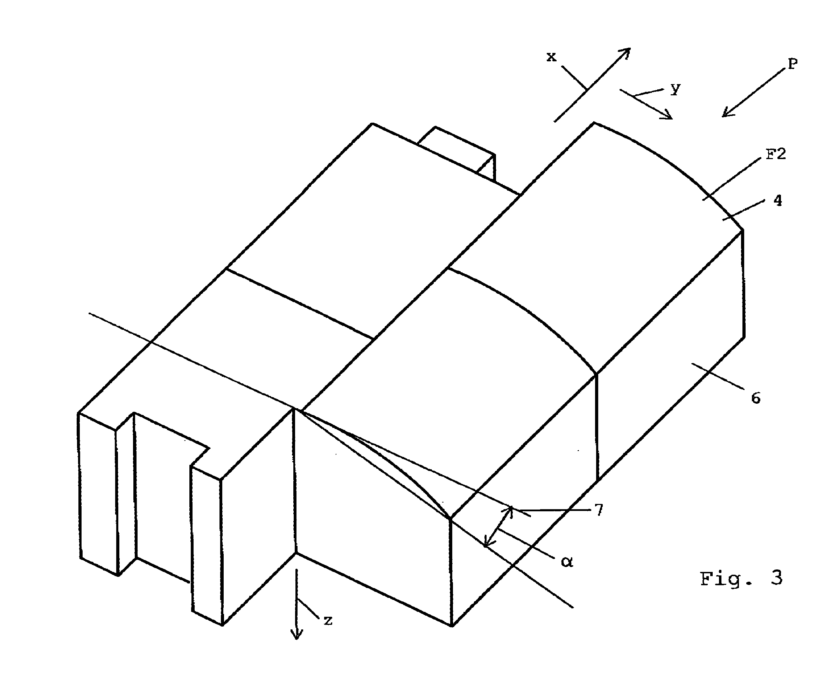

In der Figur 3 ist eine zweite Ausführungsvariante eines Pultsteins P in perspektivischer Darstellung gezeigt. Im Unterschied zu dem in der Figur 1 gezeigten Pultstein ist ein zweiter Oberflächenabschnitt 4 nicht als ebene Fläche, sondern als tonnenförmig gewölbte Fläche F2 ausgeführt, welche gegenüber einer Horizontalen 7 in eine Querrichtung y bis zu einer zweiten Längsseite 6 um einen Winkel α abfällt, wobei der Winkel α insbesondere zwischen 5° und 20° liegt.

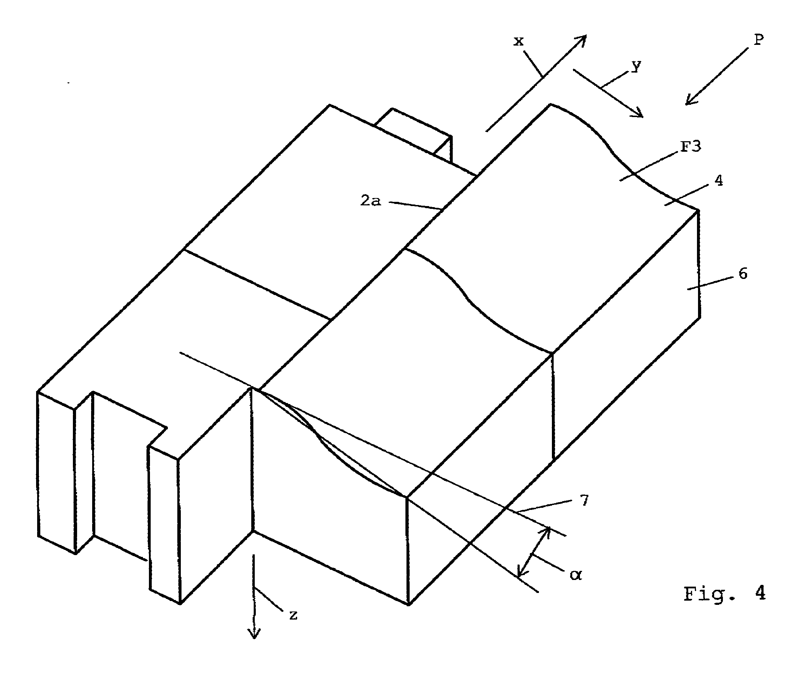

In der Figur 4 ist eine dritte Ausführungsvariante eines Pultsteins P in perspektivischer Darstellung gezeigt. Im Unterschied zu den in den Figuren 1 und 3 dargestellten Ausführungsvarianten weist der in der Figur 4 dargestellte Pultstein P einen zweiten Oberflächenabschnitt 4 auf, welcher als wellenförmige Fläche F3 ausgebildet ist, welche von einer Längsscheinfuge 2a in eine Querrichtung y gegenüber einer Horizontalen 7 bis zu einer zweiten Längsseite 6 um einen Winkel α abfällt, wobei der Winkel α insbesondere zwischen 5° und 20° liegt.

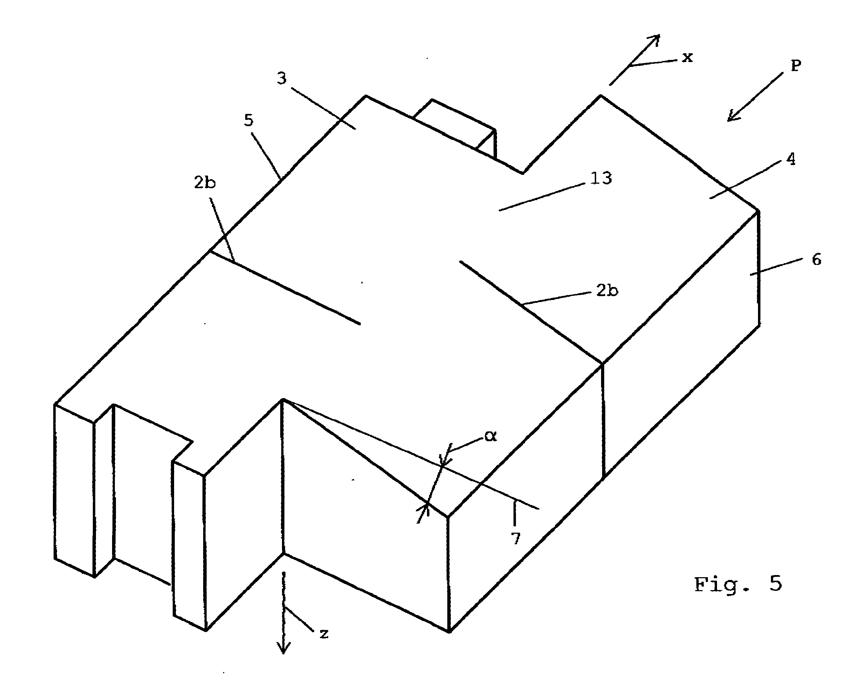

In der Figur 5 ist eine vierte Ausführungsvariante eines Pultsteins P dargestellt. Im Unterschied zu der in der Figur 1 dargestellten ersten Ausführungsvariante weist der in der Figur 5 dargestellte Pultstein P keine Längsscheinfuge auf, welche einen ersten Oberflächenabschnitt 3, der einer ersten Längsseite 5 zugeordnet ist, von einem zweiten Oberflächenabschnitt 4, der einer zweiten Längsseite 6 zugeordnet ist, trennt. Vielmehr ist der Übergang zwischen dem ersten Oberflächenabschnitt 3 und dem zweiten Oberflächenabschnitt 4 als abgerundete Übergangskante 13 ausgebildet. Die abgerundete Übergangskante 13 verläuft in eine Längsrichtung x zwischen zwei Querscheinfugen 2b.

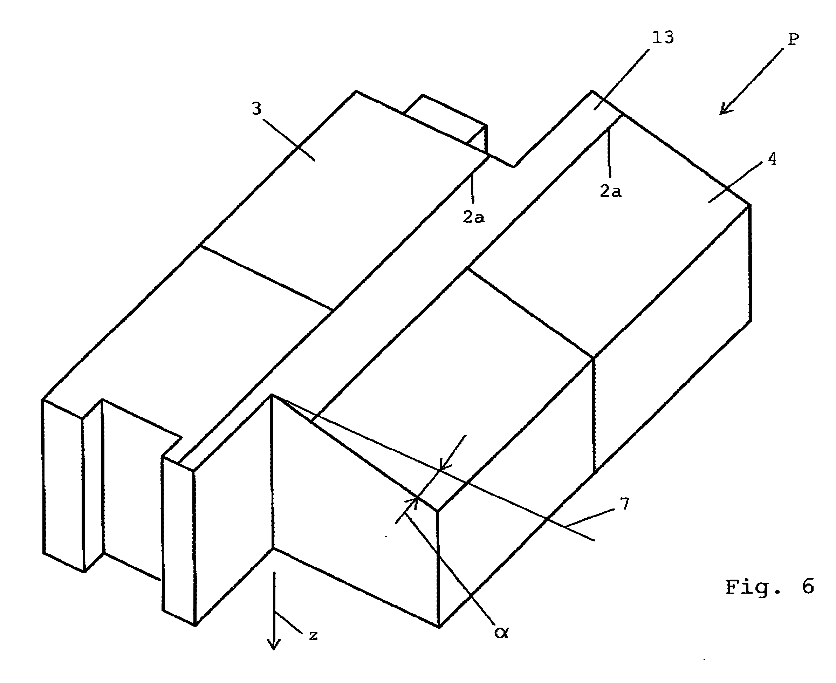

In der Figur 6 ist eine fünfte Ausführungsvariante eines Pultsteins P dargestellt. Bei diesem Pultstein P gehen ein erster Oberflächenabschnitt 3 und ein zweiter Oberflächenabschnitt 4 genauso wie bei der in der Figur 5 dargestellten Ausführungsvariante mit einer abgerundeten Übergangskante 13 ineinander über. Im Unterschied zu der in der Figur 5 gezeigten Ausführungsvariante wird die abgerundete Übergangskante 13 jedoch durch zwei Längsscheinfugen 2a seitlich begrenzt.

Auch bei der vierten und fünften Ausführungsvariante, die in den Figuren 5 und 6 dargestellt sind, fällt der zweite Oberflächenabschnitt 4 gegenüber einer Horizontalen 7 um einen Winkel α ab.

Grundsätzlich bilden bei allen fünf Ausführungsvarianten eines Pultsteins die zweiten Oberflächenabschnitte 4 eine Wasserführungsfläche, welche Wasser vorrangig in y-Richtung und eine z-Richtung leitet. Die ersten Oberflächenabschnitte 3 sind grundsätzlich als Fortführung einer angrenzenden, nicht dargestellten Verkehrs- und/oder Wegefläche ausgebildet.

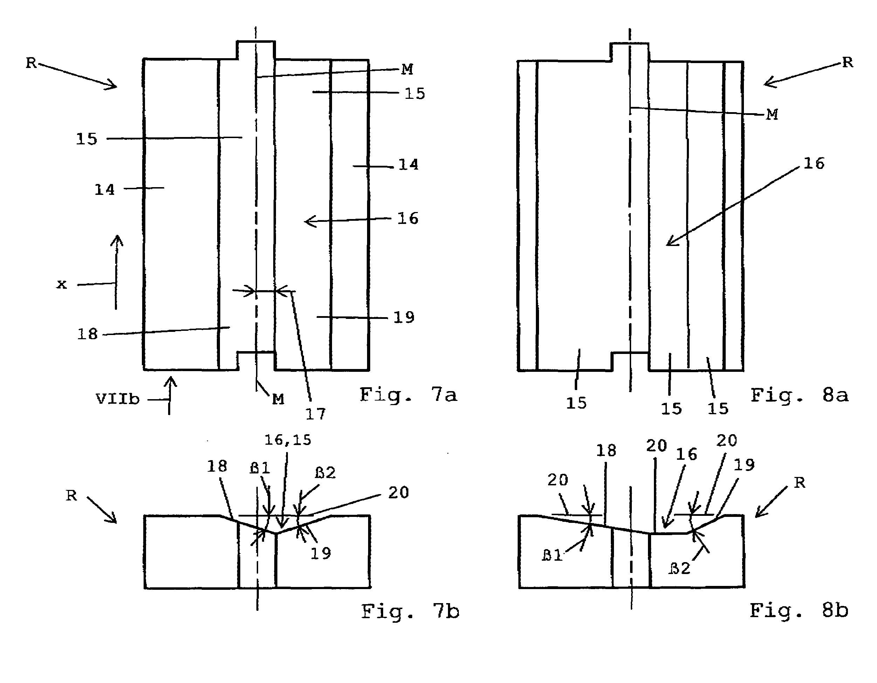

In der Figur 7a ist eine Draufsicht auf einen Rinnenstein R gezeigt. Die Figur 7b zeigt eine Seitenansicht des Rinnensteins R aus einer Pfeilrichtung VIIb. Der Rinnenstein R gehört zu einem Rinnensteinsystem bzw. einem Steinsystem, wobei mehrere Rinnensteine R eine Rinnenleiste bilden. Der Rinnenstein R weist einen zweiteiligen, ebenen, horizontal verlaufenden Oberflächenabschnitt 14 und einen zweiteiligen, geneigt verlaufenden Oberflächenabschnitt 15 auf. Der zweite Oberflächenabschnitt 15 bildet einen Kanalabschnitt 16 des Rinnensteins R. Der zweite Oberflächenabschnitt 15 bzw. der Kanalabschnitt 16 ist zu einer Mittellinie M des Rinnensteins R um einen Mittenversatz 17 versetzt. Der Kanalabschnitt 16 verläuft in eine Längsrichtung x und weist zwei Kanalwandungen 18, 19 auf, welche gegenüber einer Horizontalen 20 um gleiche Winkel β1 und β2 abfallen. Bei der in den Figuren 7a und 7b dargestellten ersten Ausführungsvarianten des Rinnensteins R ist der zweite Oberflächenabschnitt 15 bzw. der Kanalabschnitt 16 außermittig zu der Mittellinie M des Rinnensteins R angeordnet.

In den Figuren 8a und 8b ist eine zweite Ausführungsvariante eines Rinnensteins R dargestellt. Bei dieser zweiten Ausführungsvariante ist ein zweiter, dreiteiliger Oberflächenabschnitt 15 bzw. ein Kanalabschnitt 16 asymmetrisch gestaltet. Im Wesentlichen umfasst der Kanalabschnitt 16 Kanalwandungen 18, 19 und einen Kanalboden 21. Die Kanalwandungen 18 und 19 verlaufen zu einer Horizontalen 20 mit unterschiedlichen Winkeln β1 und β2.

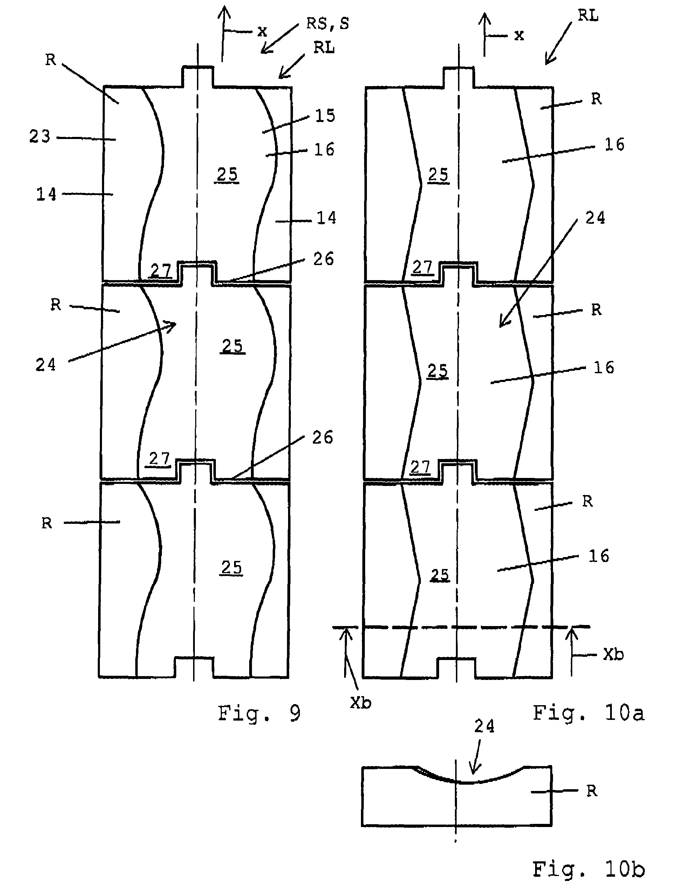

In der Figur 9 ist eine Draufsicht auf drei in eine Längsrichtung x aneinanderliegende Rinnensteine R dargestellt, welche eine Rinnenleiste RL bilden, die zu einem Rinnensteinsystem RS bzw. einem Steinsystem S gehört. Eine Oberseite 23 des Rinnensteins R wird durch einen ersten, zweiteiligen Oberflächenabschnitt 14 gebildet, welcher eben ausgeführt ist und horizontal verläuft, und umfasst weiterhin einen zweiten Oberflächenabschnitt 15, welcher einen Kanalabschnitt 16 bildet. Die Kanalabschnitte 16 der drei dargestellten Rinnensteine R bilden miteinander einen Kanal 24, welcher nichtdargestelltes Wasser in die Längsrichtung x führt. Innerhalb jedes Rinnensteins R weist jeder Kanalabschnitt 16 eine Richtungsänderung 25 auf. Hierdurch entsteht ein meanderförmiger bzw. schlangenförmiger Verlauf des Kanals 24. Zusätzlich weist der Kanal 24 an Stoßstellen 26, an welchen die einzelnen Rinnensteine R aneinander anliegen, weitere Richtungsänderungen 27 auf.

In den Figuren 10a und 10b ist eine vierte Ausführungsvariante eines Rinnensteins R dargestellt, wobei die Figur 10a eine zu der Figur 9 vergleichbare Darstellung von drei Rinnensteinen, welche in eine Längsrichtung x aneinander gelegt sind, zeigt. Die Figur 10b zeigt einen Schnitt durch einen der in der Figur 10a gezeigten Rinnensteine R entsprechend der Schnittlinie Xb-Xb.

Eine in der Figur 10a in Draufsicht dargestellte Rinnenleiste RL weist einen meanderförmig bzw. zickzackförmig verlaufenden Kanal 24 auf, wobei Kanalabschnitte 16 der einzelnen Rinnensteine R, wie dies aus der Figur 10b hervorgeht, einen wannenförmigen, abgerundeten Verlauf aufweisen. Auch hier erfährt der Kanalabschnitt 16 jedes Rinnensteins R eine Richtungsänderung 25. An Stoßstellen 26 zwischen den einzelnen Rinnensteinen R erfolgt jeweils eine weitere Richtungsänderung 27. Durch die wiederholten Richtungsänderungen in dem Kanal 24 der aus mehreren Rinnensteinen R gebildeten Rinnenleiste RL wird zum einen die Fließgeschwindigkeit des nicht dargestellten Wassers reduziert und zum anderen ein Verwirbelung des Wassers erreicht, durch welche der Kanal 24 besser von Verschmutzungen freigespült wird.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

### Bezugszeichenliste:

- S: Steinsystem
- PS: Pultsteinsystem
- RS: Rinnensteinsystem
- P: Pultstein
- R: Rinnenstein
- PL: Pultleiste
- RL: Rinnenleiste
- 1: Oberseite
- 2: Scheinfuge
- 2a: Längsscheinfuge
- 2b: Querscheinfuge
- 3: erster Oberflächenabschnitt von P
- 4: zweiter Oberflächenabschnitt von P
- 5: erste Längsseite von P
- 6: zweite Längsseite von P
- 7: Horizontale
- 8: Querseite von P
- 9: Querseite von P
- 10: Nase von P
- 11: Rücksprung von P
- 12: Längsversatz
- 13: abgerundete Übergangskante
- 14: erster Oberflächenabschnitt von R
- 15: zweiter Oberflächenabschnitt von R
- 16: Kanalabschnitt
- 17: Mittenversatz
- 18: Kanalwandung
- 19: Kanalwandung
- 20: Horizontale
- 21: Kanalboden
- 22: - nicht belegt -
- 23: Oberseite
- 24: Kanal
- 25: Richtungsänderung
- 26: Stoßstelle
- 27: Richtungsänderung
- F1: ebene Fläche
- F2: tonnenförmig gewölbte Fläche
- F3: wellenförmige Fläche
- x: Längsrichtung
- y: Querrichtung
- z: Richtung
- α: Winkel
- β1: Winkel
- β2: Winkel

## Patentansprüche

1. Steinsystem (S) für den Straßen- und/oder Wegebau, **dadurch gekennzeichnet, dass** das Steinsystem (S) insbesondere ein Pultsteinsystem (PS) und/oder insbesondere ein Rinnensteinsystem (RS) umfasst, wobei jeder Pultstein (P) bzw. Rinnenstein (R) des Pultssteinsystems (PS) bzw. des Rinnensteinsystems (RS) wenigstens einen Oberflächenabschnitt (3, 14) aufweist, welcher zur Ergänzung einer Verkehrsfläche ausgebildet ist, und wenigstens einen weiteren Oberflächenabschnitt (4, 15) aufweist, welcher zur gerichteten Wasserführung ausgebildet ist, wobei die Oberflächenabschnitte (3, 4; 14, 15) in ihrer Formgebung optimiert bzw. in ihrem Übergang aufeinander angepasst sind.

2. Steinsystem nach Anspruch 1, **dadurch gekennzeichnet, dass** das Pultsteinsystem (PS) zur Bildung einer Pultleiste (PL) mehrere Pultsteine (P) umfasst, wobei benachbarte Pultsteine (P) formschlüssig aneinander anliegen und wobei die Pultsteine (P) an einer die Obsrflächenabschnitte (3, 4) umfassenden Oberseite (1) insbesondere Scheinfugen (2) aufweisen, wobei bei jedem Pultstein (P) entlang einer in Längsrichtung (x) der Pultleiste (PL) verlaufenden ersten Längsseite (5) der erste, horizontale Oberflächenabschnitt (3) und entlang einer in die Längsrichtung (x) verlaufenden zweiten Längsseite (6) der zweite, geneigte Oberflächenabschnitt (4) angeordnet ist, wobei der geneigte Oberflächenabschnitt (4) von dem ersten Oberflächenabschnitt (3) zu der zweiten Längsseite (6) in einem gegenüber der Horizontalen (7) gemessenen Winkel (α) von bis zu 20° abfällt.

3. Steinsystem nach Anspruch 2, **dadurch gekennzeichnet, dass** der erste, ebene Oberflächenabschnitt (3) und der zweite, schräge Oberflächenabschnitt (4) durch wenigstens eine in die Längsrichtung (x) verlaufende Scheinfuge (2, 2a) getrennt sind.

4. Steinsystem nach Anspruch 2, **dadurch gekennzeichnet, dass** der erste, ebene Oberflächenabschnitt (3) und der zweite, schräge Oberflächenabschnitt (4) mit einer Übergangskante (13), welche insbesondere abgerundet ausgebildet ist, ineinander übergehen.

5. Steinsystem nach Anspruch 2, **dadurch gekennzeichnet, dass** die Scheinfuge (2, 2a) bzw. die Scheinfugen (2, 2a), welche in die Längsrichtung (x) verlaufen, mit Abstand zu der Übergangskante (13) angeordnet sind.

6. Steinsystem nach einem der vorhergehenden Ansprüche, **dadurch gekennzeichnet, dass** jeder Pultstein (P) an gegenüberliegenden Kontaktflächen (8, 9) eine Nase (10) und einen Rücksprung (11) aufweist, wobei diese Formgebungen insbesondere dem ebenen Oberflächenabschnitt (3) zugeordnet sind.

7. Steinsystem nach einem der vorhergehenden Ansprüche 2 bis 5, **dadurch gekennzeichnet, dass** der ebene Oberflächenabschnitt (3) und der schräge Oberflächenabschnitt (4) in der Längsrichtung (x) des Pultsteins (P) gegeneinander versetzt sind.

8. Steinsystem nach Anspruch 1, **dadurch gekennzeichnet, dass** die benachbarten Rinnensteine (R) des Rinnensteinsystems (RS) formschlüssig aneinander anliegen und eine Rinnenleiste (RL) bilden, wobei deren zweite Oberflächenabschnitte (15) als Kanalabschnitte (16) ausgebildet sind, welche einen fortlaufenden Kanal (24) bilden.

9. Steinsystem nach Anspruch 8, **dadurch gekennzeichnet, dass** der durch die benachbarten Rinnensteine (R) gebildete Kanal (24) einen mäanderförmigen Verlauf aufweist.

10. Steinsystem nach Anspruch 9, **dadurch gekennzeichnet, dass** der Kanal (24) in einem von einem der Rinnensteine (R) gebildeten Kanalabschnitt (16) wenigstens eine Richtungsänderung (25) aufweist.

11. Steinsystem nach einem der Ansprüche 8 bis 10, **dadurch gekennzeichnet, dass** der Kanalabschnitt (16) außermittig zu einer den Rinnenstein (R) in Längsrichtung (x) teilenden Mittellinie (M) ausgebildet ist.

12. Steinsystem nach einem der Ansprüche 8 bis 11, **dadurch gekennzeichnet, dass** der Kanalabschnitt (16) des Rinnensteins (R) asymmetrisch ausgebildet ist und insbesondere in der Längsrichtung (x) gegenüberliegende Kanalwandungen (18, 19) umfasst, welche unterschiedliche Steigungen oder unterschiedliche Krümmungen aufweisen.
